# EUROPEAN PATENT APPLICATION

(11) **EP 4 030 372 A1**
(43) Date of publication of application: **20.07.2022**
(21) Application number: 20863437.8
(22) Date of filing: 23.04.2020
(51) Int. Cl.: G06Q 30/06

(54) **COMMODITY STATE MANAGEMENT SYSTEM FOR DISASTER PREVENTION COMMODITY**

(30) Priority: 12.09.2019 JP 2019166567
(71) Applicant: Shimano Lab., Inc., Tokyo 170-0005 (JP)
(72) Inventor: SHIMANO, Shunnosuke, Tokyo 170-0005 (JP)
(74) Representative: v. Bezold & Partner Patentanwälte - PartG mbB
(86) International application number: PCT/JP2020/017435
(87) International publication number: WO 2021/049092

(57) **Abstract**

Provided is a system including a commodity database that stores, in association with a unique ID assigned to an emergency commodity, commodity information including an expiration date and user information; replacement advance notification means that monitor the expiration date on a predetermined monitoring schedule, determine whether it is a replacement period of the emergency commodity and, when a determination is made that it is the replacement period, send a replacement advance notification; and a software program installed on a mobile terminal and that cooperates with the mobile terminal to realize notification receiving means that automatically receive the replacement advance notification, replacement command means that send an order request for the emergency commodity related to the replacement advance notification, and browsing means that connect to the commodity database to browse the commodity information.

## Description

### Technical Field

The present disclosure relates to a commodity state management system for an emergency commodity, and particularly relates to a system that monitors a commodity state including an expiration date of a commodity and manages so that the commodity state of the emergency commodity is maintained in an appropriate state.

### Background Art

In recent years, a need has arisen in response to frequently occurring disasters to enhance, at the local municipality, corporation, and even on the general household level, emergency commodities of stockpiles or the like for disasters. However, stockpiles for disasters of general households are in a precarious situation. It is difficult to continuously maintain preparations for future, unexpected disasters at the individual and household levels. Stockpiling drinking water, food, hygiene goods, medicine, first-aid supplies and the like is minimum necessary, and commodities, especially those that have expiration dates, must be replaced periodically.

Technologies are known in which, in order to respond to replacement needs, stock information is held as information about quantities or the like of disaster supplies stored in a storage room and, when the quantity of stock is a predetermined value or lower or when a use-by/expiration date passes, a replenish request is issued. However, a technology related to the replacing of disaster supplies for which the use-by/expiration date has passed is not known.

Patent Literature 1 discloses, as a technology capable of supporting the effective utilization of articles, an information processing device that includes (i) an article information acquirer that acquires article information that is related to an article stored in a storage locker and that is sent by a radio tag attached to the article, (ii) an article state manager that manages a state of the article using the article information, (iii) a lendability determiner that determines the lendability of the article on the basis of the state of the article, and a (iv) lending processing executor that executes lending processing of the article in accordance with determination results from the lendability determiner.

However, Patent Literature 1 does not disclose a technology related to the replacing of the article stored in the storage locker.

### Citation List

### Patent Literature

Patent Literature 1: Unexamined Japanese Patent Application Publication No. 2018-180891

### Non Patent Literature

### Summary of Invention

### Technical Problem

A problem to be solved by the present disclosure is the provision of a system that manages commodity state data about stockpiled emergency commodities . This enables sharing of information about stockpiled emergency commodities. Another problem is to provide support information to a user so that the replacing of emergency commodities stockpiled in a household or the like is correctly carried out, and stockpiles are always maintained in a correct state.

### Solution to Problem

According to a first aspect of the present disclosure, a commodity state management system is provided that includes a mobile terminal of a user on which a predetermined software program is installed that manages a commodity state of an emergency commodity related to a stockpile of the user, and a server connected to the mobile terminal, the system including:
a) a commodity database provided in the server, the commodity database storing, in association with a unique ID assigned to the emergency commodity, a user ID of the user and commodity information including an expiration date of the emergency commodity;
b) a user database provided in the server, the user database storing user information that is the user ID and an application ID of the software program installed on the mobile terminal and that includes information, the application ID being recorded in association with a terminal ID of the mobile terminal; and
c) replacement advance notification means provided in the server that monitor the expiration date of the emergency commodity based on the commodity information on a predetermined monitoring schedule, determine whether it is a replacement period of the emergency commodity and, when a determination is made that it is the replacement period, send a replacement advance notification including the unique ID, the replacement advance notification being addressed to the software program installed on the mobile terminal related to the terminal ID that is associated with the application ID included in the user information of the user of the user ID included in the commodity information of the emergency commodity related to the determination,
wherein the software program cooperates with the mobile terminal to realize notification receiving means that automatically receive the replacement advance notification, replacement command means that send an update order request for the emergency commodity related to the replacement advance notification, and browsing means that connect to the commodity database to browse the commodity information associated with the unique ID related to the replacement advance is provided for displaying notification.

A configuration is possible in which the software program is installed on the mobile terminal and cooperates with the mobile terminal to further realize
member information input means that input member information including a member configuration of a member that uses the stockpile,
template display means that display a quantity setting template for an emergency commodity list generated in accordance with the member information, and
new order request means that send, to the server, a new order request for the emergency commodity in accordance with the emergency commodity list that is completed by receiving a quantity setting to the quantity setting template.

A configuration is possible in which a default quantity calculated based on member information related to an input of the member information is set in the displayed quantity setting template.

A configuration is possible in which code storage presentation means that store a code including the unique ID and that are capable of presenting the code to the mobile terminal in a predetermined presentation method are attached to the emergency commodity, and the software program is installed on the mobile terminal and cooperates with the mobile terminal to further realize ID acquiring means that receive the code related to the presentation to acquire the unique ID.

A configuration is possible in which the commodity information further includes commodity item identification information of the emergency commodity.

A configuration is possible in which the presentation method is an optically readable display of the code, and the acquiring of the unique ID is realized by cooperation between an image acquirer of the mobile terminal and the software program.

A configuration is possible in which the presentation method is sending of the code wirelessly, and the acquiring of the unique ID is realized by cooperation between a wireless function of the mobile terminal and the software program.

A configuration is possible in which update request means that send to the commodity database a unique code of the emergency commodity provided by the order request to request updating of the commodity information of the emergency commodity related to the stockpile are realized by the software program being installed on the mobile terminal and cooperating with the mobile terminal.

### Brief Description of Drawings

FIG. 1 is an overall drawing illustrating configuration of a commodity state management system according to an embodiment;

FIG. 2 is a drawing illustrating an example in which a radio tag is used instead of a two-dimensional code as code storage presentation means attached to an emergency commodity;

FIG. 3 is a functional block diagram illustrating functional configuration of a commodity state management server;

FIG. 4 is a block diagram illustrating data structure of user information stored in a user database;

FIG. 5 is a block diagram illustrating data structure of data stored in a commodity database;

FIG. 6 is a block diagram illustrating data structure of member data stored in a member database;

FIG. 7 is a block diagram illustrating details of data structure of member configuration data in a case of n members;

FIG. 8 is a block diagram illustrating functional components realized in a mobile terminal of a user on which a commodity state management application for commodity state management of the embodiment is installed;

FIG. 9 is a concept drawing of a member information input screen;

FIG. 10 is a concept drawing illustrating configuration of a quantity setting template for stockpiled emergency commodities;

FIG. 11 is a sequence drawing of a new shipment based on an order received from the user;

FIG. 12 is a concept drawing illustrating a screen display of a replacement advance notification;

FIG. 13 is a concept drawing of an application screen that receives operations for ID reading and browsing requests;

FIG. 14 is an application screen for browsing that is displayed on the mobile terminal as a result of an operation of the user;

FIG. 15 is a block diagram illustrating functional configuration realized in a mobile terminal of a supplier, on which a supplier commodity state management application for commodity state management of the embodiment is installed;

FIG. 16 is a concept drawing illustrating an example of an application screen for ID acquiring and browsing starting;

FIG. 17 is an example of a commodity information display screen displayed as a result of an operation of a browser; and

FIG. 18 is a sequence drawing illustrating operations of constituents of a system related to replacing of the embodiment.

### Description of Embodiments

The objective of managing a commodity state of a commodity stockpiled for disaster prevention to share information about the commodity state and provide information so that actual commodity replacement is correctly performed is realized by providing a commodity state management system that utilizes a mobile terminal of a user or the like.

Hereinafter, specific examples of the present disclosure are described in an embodiment that uses the drawings.

In the embodiment, the various functional components that realize the functions of the present disclosure are realized by a processor of a mobile terminal or a server executing a software program stored in a storage device of that mobile terminal or server and, as necessary, cooperating with databases and various types of devices.

### Embodiment 1

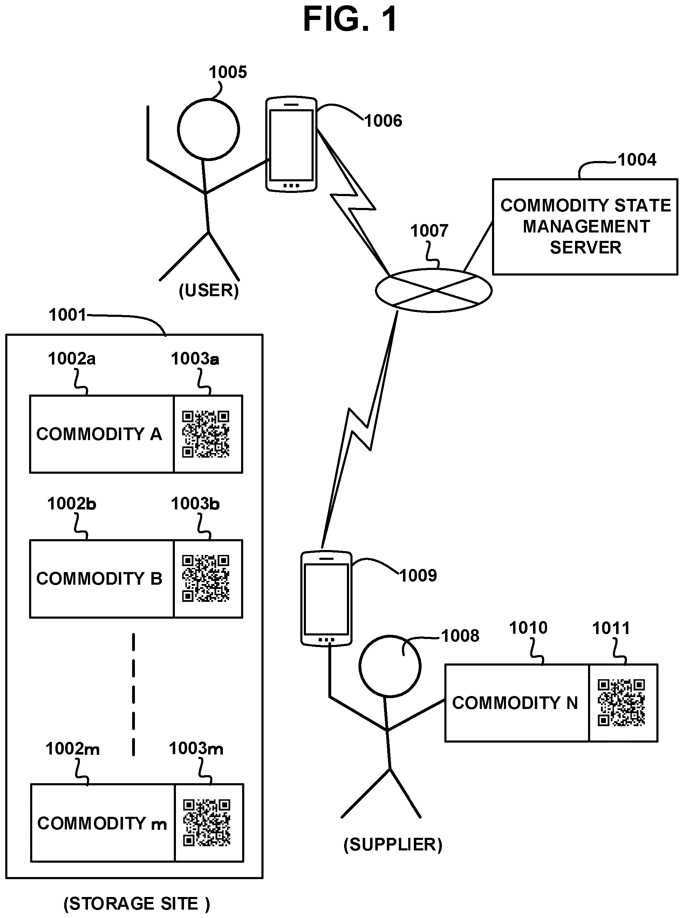

FIG. 1 is an overall drawing illustrating configuration of a commodity state management system of the present embodiment.

The commodity state management system includes emergency commodities 1002a to 1002m stockpiled at a storage site 1001, a commodity state management server 1004, a mobile terminal 1006 carried by a user 1005, a communication network 1007, a mobile terminal 1009 carried by a supplier 1008, and a replacement delivery commodity 1010.

Here, "user" is a term used to refer to a system user that uses the system to maintain commodity states of emergency commodities at the storage site of that user.

"Supplier" is a term used to refer to an entity that performs deliveries or the like for delivering, to the storage site, emergency commodities for new shipments or replacements under the management of the system in order to provide, as a service, commodity state maintenance by the system.

Two-dimensional codes 1003a to 1003m that each store a unique ID that is unique to a corresponding commodity of the emergency commodities 1002a to 1002m at the storage site are each attached to the corresponding commodity.

Additionally, a two-dimensional code 1011 is also attached to the replacement delivery commodity 1010 that the supplier is transporting for the purpose of replacement.

These two-dimensional codes are readable by a code scanning function of the mobile terminal 1006, the mobile terminal 1009, or the like.

In this case, a two-dimensional code is used as a code storage presentation means for storing the unique ID, but the code storage presentation means usable in the present disclosure is not limited thereto. Provided that the mobile terminals that are used can read the code storage presentation means, other types of code storage presentation means such as one-dimensional bar codes, radio tags, and the like can be appropriately used.

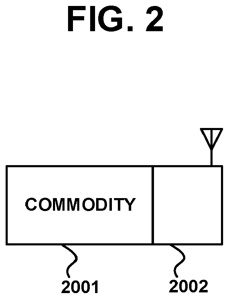

FIG. 2 is a drawing illustrating an example in which a radio tag is used instead of the two-dimensional code as the code storage presentation means attached to the emergency commodity.

In a modified example, a radio tag 2002, provided with a memory in which the unique ID is stored, is attached to an emergency commodity 2001. In this system, the unique ID stored in the memory is read by a wireless function of the mobile terminal of the user or the supplier.

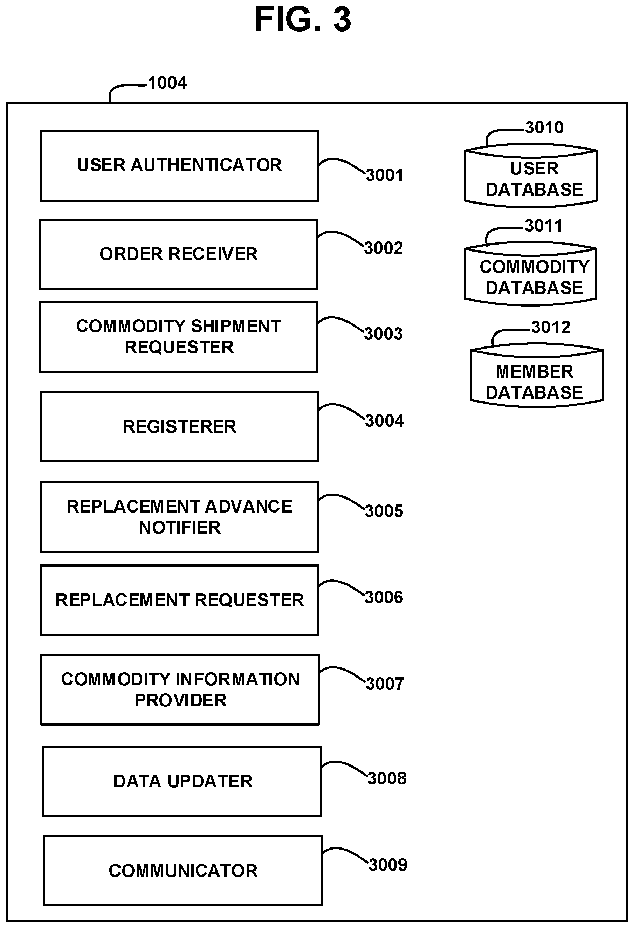

FIG. 3 is a functional block diagram illustrating the functional components of the commodity state management server 1004.

These functional components function as a result of the processor of the commodity state management server 1004 executing a software program for commodity state management that is stored in the storage device of the commodity state management server and, as necessary, cooperating with the hereinafter described databases and mobile terminals.

The commodity state management server 1004 includes, as functional components, a user authenticator 3001 that authenticates the accessing user 1005 that operates the mobile terminal, an order receiver 3002, a registerer 3003, a commodity shipment requester 3004, a replacement advance notifier 3005, a replacement requester 3006, a commodity information provider 3007, a data updater 3008, a communicator 3009 that controls communication with the mobile terminals of the user 1005 and the supplier 1009, a user database 3010, a commodity database 3011, and a member database 3012.

When the user installs a commodity state management application on the mobile terminal of the user, user information that is described later is registered in the user database 3010.

### User database

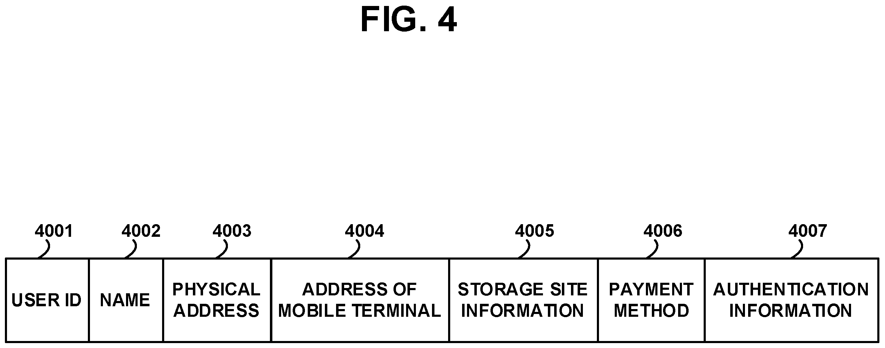

FIG. 4 is a block diagram illustrating data structure of the user information stored in the user database 3010. The user information includes the data items of a user ID 4001, a name 4002, a physical address 4003, an address 4004 of the mobile terminal, storage site information 4005 including a storage site ID, a payment method 4006, and authentication information 4007.

Here, the term "address of the mobile terminal" refers to an application ID of the commodity state management software program installed on the mobile terminal (hereinafter referred to as "commodity state management application"). When the commodity state management application is installed on the mobile terminal, the address of the mobile terminal is linked to the terminal ID of the mobile terminal and registered on the administrator side of the commodity state management system. The address of the mobile terminal is used for user authentication, push notifications, and the like.

### Commodity database

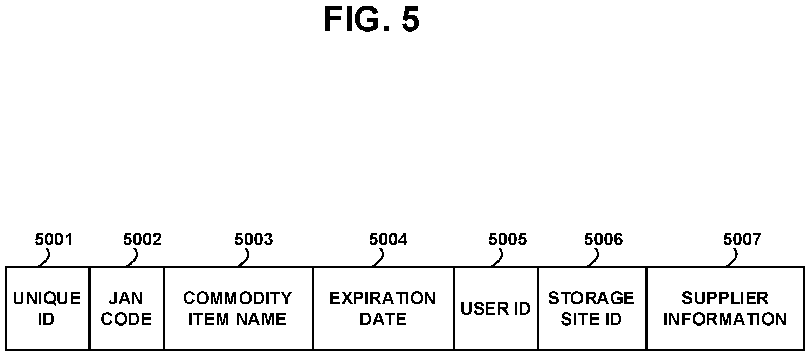

FIG. 5 is a block diagram illustrating data structure of data stored in the commodity database 3011. This structure includes a unique ID 5001 that uniquely identifies an emergency commodity, a JAN code 5002 that is commodity item identification information of the emergency commodity, a commodity item name 5003, commodity information 5004 that includes an expiration date, a user ID 5005 of the user that orders the commodity, a storage site ID 5006, and supplier information 5007 that includes the address of the mobile terminal 1009.

Here, the term "expiration date" refers to a date that is set for each emergency commodity at the time of production of the emergency commodity and represents the end of a period in which the emergency commodity is usable or tastable, and this term is used as a term including reference to a use-by date.

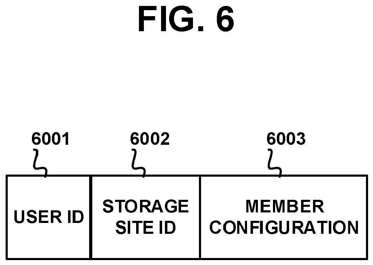

FIG. 6 is a block diagram illustrating data structure of member data stored in the member database 3012.

The member data includes a user ID 6001, a storage site ID 6002, and member configuration data 6003.

The member configuration data 6003 includes individual attributes of each member, such as a family member, that is expected to use the stockpiled commodities stored at the storage site.

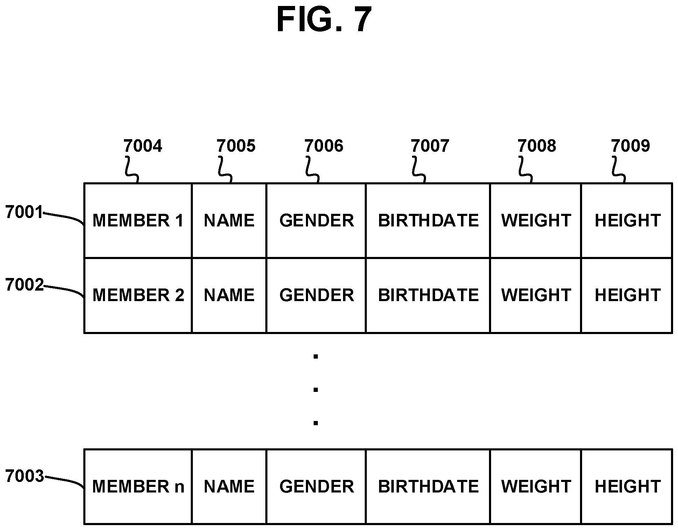

FIG. 7 is a block diagram illustrating the details of data structure of member configuration data in a case of n members. The attributes of each member, for example, individual attributes 7001 of member 1, individual attributes 7002 of member 2, and individual attributes 7003 of member n, are stored.

The attributes of member identification information 7004, a name 7005, a gender 7006, a birthdate 7007, a weight 7008, and a height 7009 are stored for each member.

The order receiver 3002 receives an ordering electronic message that is sent from the mobile terminal 1006 of the user and that includes a stockpiled emergency commodity list.

The commodity shipment requester 3003 sends, to the mobile terminal of the supplier, a shipment request electronic message regarding the emergency commodities on the stockpiled emergency commodity list.

The registerer 3004 registers, in the commodity database 3011 for the emergency commodities shipped from the supplier to the storage site, the commodity data containing the unique ID, the JAN code, the commodity item name, the expiration date, the user ID related to the ordering, the storage site ID of the shipment destination, and the supplier information.

The replacement advance notifier 3005 determines whether, at a monitoring timing of a predetermined monitoring cycle, the expiration date of an emergency commodity registered in the commodity database is, at that timing, in a replacement period determined by a calculation method set in advance for each commodity item and, for an emergency commodity that is in the replacement period, pushes, via the communicator 3009 to the address of the mobile terminal of the user of that emergency commodity, a replacement advance notification for the emergency commodity that is in the replacement period.

When the communicator 3009 receives a replacement command from the mobile terminal 1006 of the user that receives the replacement advance notification, the replacement requester 3006 sends, to the address included in the supplier information 5007, a replacement request for the emergency commodity indicated in the replacement command.

The commodity information provider 3007 references the commodity database 3011 in accordance with a browsing request including the unique ID from the mobile terminal of the user, and sends, to the mobile terminal related to the browsing request, browsing information that includes commodity information related to the browsing request.

When the communicator 3009 receives a replacement report from the mobile terminal 1009 of the supplier, the data updater 3008 executes updating of the commodity data in accordance with the replacement.

Here, the term "update" means deleting the commodity data of the emergency commodity that is to be replaced and newly adding the commodity data of the emergency commodity that is delivered for the replacement.

### Mobile terminal of user

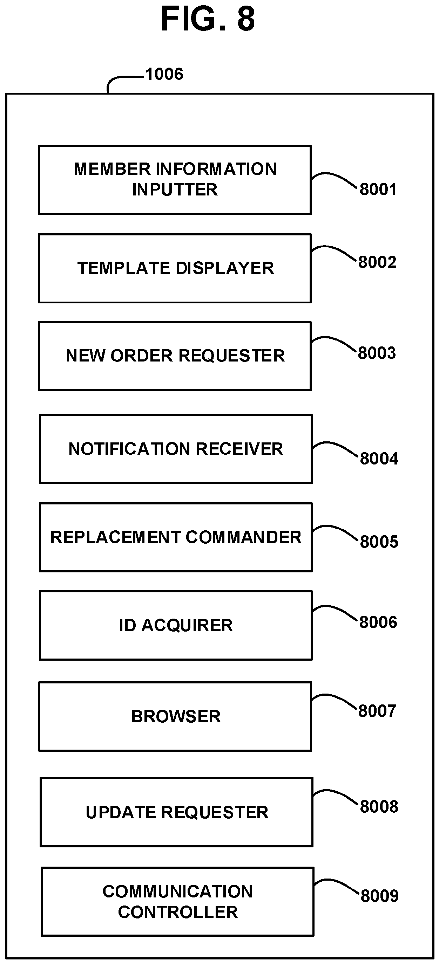

FIG. 8 is a block diagram illustrating the functional components realized in the mobile terminal 1006 of the user on which the commodity state management application that is provided by the administrator of the commodity state management system of the present embodiment and that is for commodity state management is installed.

These functional components function as a result of the processor of the mobile terminal 1006 executing the commodity state management application that is executably stored by instalment on the storage device of the mobile terminal.

The mobile terminal 1006 includes the functional components of a member information inputter 8001, a template displayer 8002, a new order requester 8003, a notification receiver 8004, a replacement commander 8005, an ID acquirer 8006, an update requester 8007, a browser 8008, and a communication controller 8009 that controls communication with the commodity state management server.

The member information inputter 8001 displays a member information input screen on the mobile terminal, and supports the inputting of member information by the user.

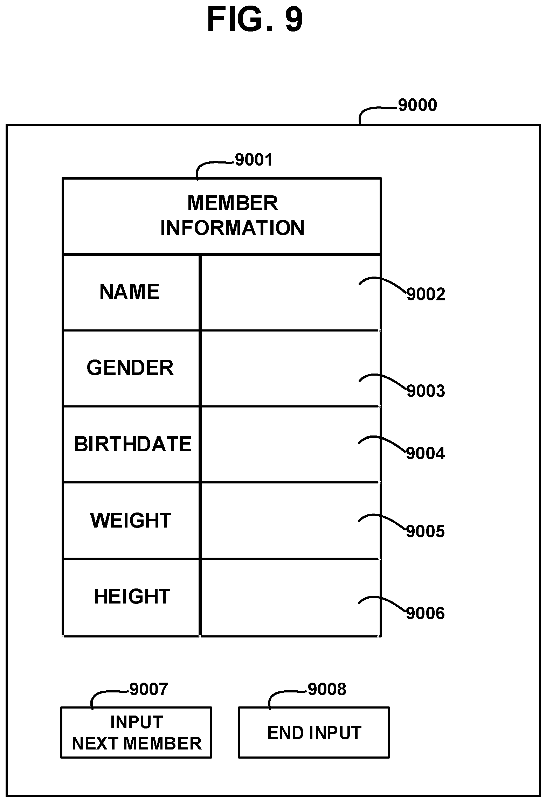

FIG. 9 is a concept drawing of the member information input screen.

The member information input screen 9000 includes a member information input form 9001, an input next member button 9007, and an end input button 9008. The member information input form includes a name input field 9002, a gender input field 9003, a birthdate input field 9004, a weight input field 9005, and a height input field 9006, which constitute basic information for creating the emergency commodity list needed for the stockpile.

The individual attributes usable in the present disclosure are not limited to the individual attributes constituting the member information described above. It is possible to use different types of individual attributes, a few types of individual attributes, and the like.

The template displayer 8002 displays, on the mobile terminal, a quantity setting template for the stockpile emergency commodities that includes sets of commodity items selected on the basis of the inputted member information and default quantities calculated using a predetermined calculation method for each commodity item.

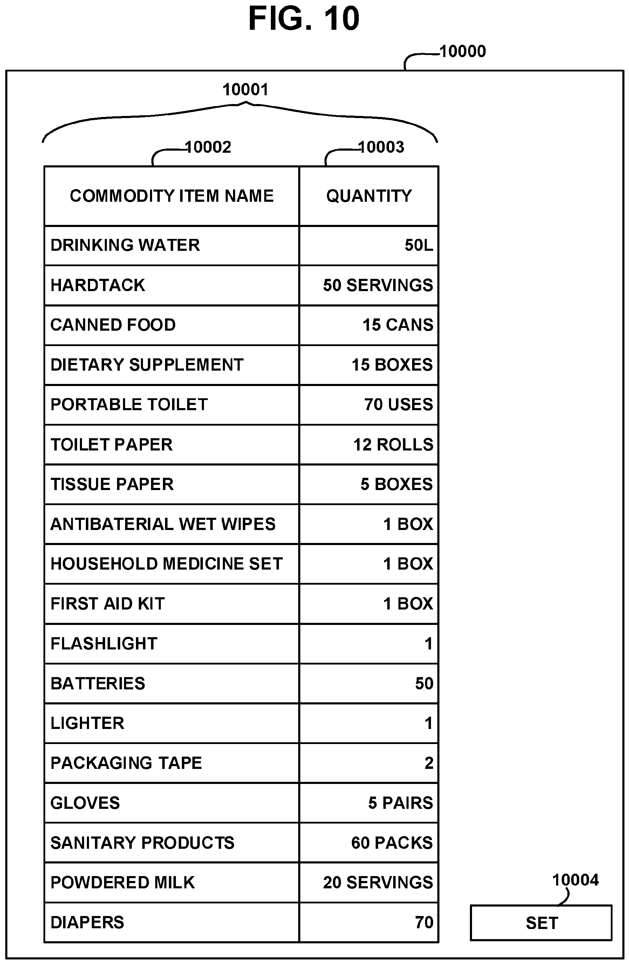

FIG. 10 is a concept drawing illustrating the quantity setting template for the stockpiled emergency commodities.

A quantity setting template screen 10000 for the stockpiled emergency commodities includes a quantity setting template 10001 for stockpiled emergency commodities including a commodity item name field 10002 and a quantity field 10003, and a set button 10003. On the quantity setting template screen 10000, sets of the commodity items and default values of the quantities thereof are input on the basis of the information included in the member information. The quantity setting template is generated such that the user only has to change entries that are specifically requested.

For example, when the member information includes an adult female, the quantity setting template for the stockpiled emergency commodities is generated with sanitary products added to the commodity item field, and a quantity corresponding to the number of adult females is set. When the member information includes an infant under the age of two, the quantity setting template is generated with a commodity item such as powdered milk and diapers added, and quantities corresponding to the number of infants under the age of two are set as default quantities.

In this case, a method is used in which only one quantity setting template is displayed, but the display methods usable in the present disclosure are not limited thereto, and a method may be used in which multiple quantity setting templates generated by multiple preset commodity item selection methods and multiple preset quantity calculation methods are displayed, and the user selects one of the quantity setting templates.

The new order requester 8003 sends, to the commodity state management server 1004, an order request electronic message including the stockpiled emergency commodity list set by the stockpiled emergency commodity setting template.

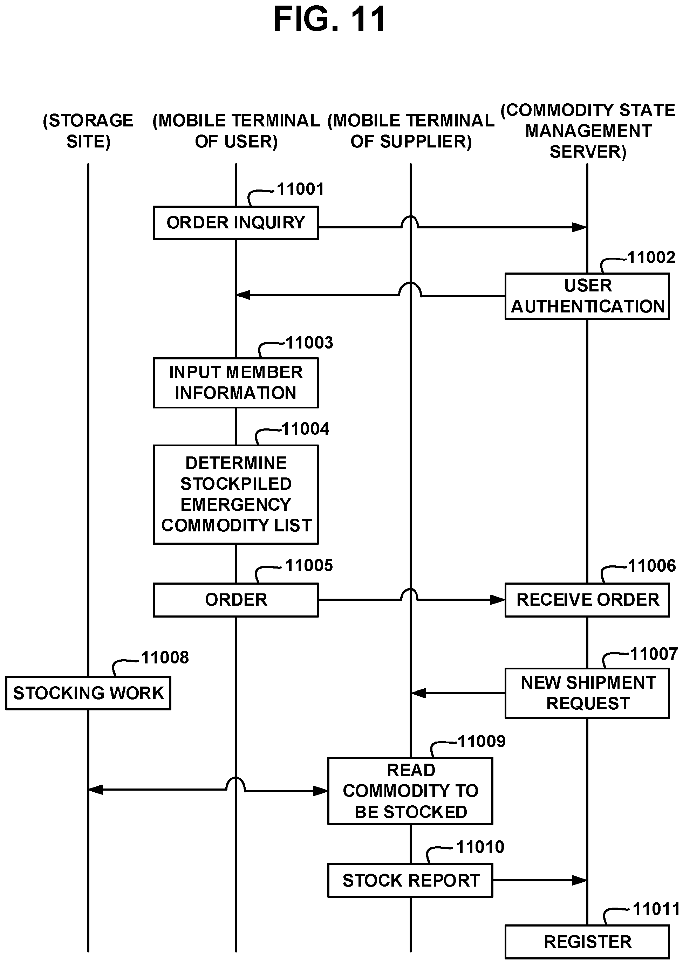

FIG. 11 is a sequence drawing illustrating the operations for a new shipment based on an order received from the user.

In the following description, the simplified term "mobile terminal" is used for the sake of ease of description, but "the mobile terminal of the user" more accurately refers to the "mobile terminal on which the commodity state management application is installed", and "the mobile terminal of the supplier" more accurately refers to the "mobile terminal on which the supplier commodity state management application is installed."

In an order inquiry step 11001, the mobile terminal sends, in response to an operation by the user, an inquiry electronic message that includes authentication information to inquire about ordering emergency commodities.

In a user authentication step 11002, the commodity state management server 1004 compares the authentication information and the application ID of the commodity state management application included in the inquiry electronic message with the authentication information and the application ID stored in the user database 3010.

If the information matches, the commodity state management server 1004 returns an authentication electronic message to the mobile terminal that sent the inquiry.

In a member information input step 11003, the mobile terminal that receives the authentication electronic message displays the member information input screen 9000.

When the user inputs the member information in the displayed member information input form 9001 and presses the end input button 9008, the subsequent stockpiled emergency commodity list determination step 11004 is executed.

In the stockpiled emergency commodity list determination step 11004, the mobile terminal displays the quantity setting template screen 10000 for the stockpiled emergency commodities.

When the user finishes confirming or editing the quantity for each commodity item of the displayed quantity setting template 10001 for the stockpiled emergency commodities, and presses the set button 10004, the stockpiled emergency commodity list is determined and the subsequent ordering step 11005 is executed.

In the ordering step 11005, the mobile terminal sends, to the commodity state management server 1004, an ordering electronic message that includes the determined stockpiled emergency commodity list.

In an order receiving step 11006, the commodity state management server 1004 receives the ordering electronic message that is sent from the mobile terminal 1006 of the user and that includes the stockpiled emergency commodity list.

In a new shipment request step 11007, the commodity state management server 1004 sends, to the mobile terminal of the supplier, a shipment request electronic message regarding the emergency commodities of the stockpiled emergency commodity list.

In a stocking work step 11008, the supplier carries out stocking work at the storage site of the commodities of the stockpiled emergency commodity list.

In a commodity to be stocked reading step 11009, the mobile terminal of the supplier reads the two-dimensional codes attached to the emergency commodities subjected to the stocking work are.

In a stocking reporting step 11010, the mobile terminal operated by the supplier sends, to the commodity state monitoring server 1004, a new stock report electronic message including the unique IDs of the stocked emergency commodities.

In a registering step 11011, the commodity state management server registers, in the commodity database, the received commodity data of the commodities to be stocked.

Next, further description of the functional components realized in the mobile terminal of the user is given.

In accordance with an application start-up action of a user performed in response to a push notification that is sent from the commodity state management server, having the commodity state management application installed on the mobile terminal 1008 of the user as the target application, the notification receiver 8004 displays a screen illustrating the content of the replacement advance notification related to the push notification (a screen that is displayed by the function of the mobile terminal on which the commodity state management application is installed, that receives actions of the user, and that displays information and the like corresponding to the actions of the user; hereinafter, a screen displayed by the function of the installed commodity state management application is referred to as an "application screen").

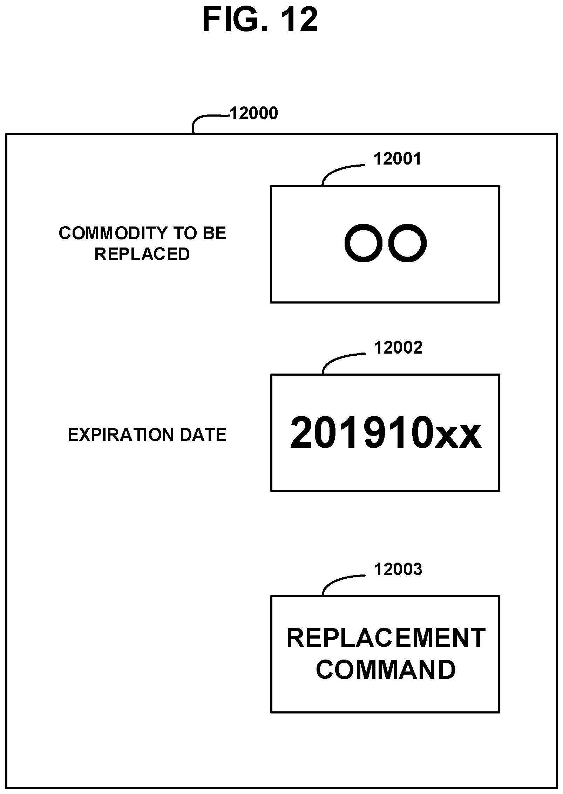

FIG. 12 is a concept drawing illustrating the application screen of the replacement advance notification.

A display area 12001 of the emergency commodity to be replaced, a display area 12002 of the expiration date, and a replacement command button 12003 that receives an action from the user to execute a replacement command are displayed on a notification screen 12000.

With an action performed on the replacement command button 12003 as the trigger, the replacement commander 8005 sends, to the commodity state management server 1004, a replacement command for the emergency commodity to be replaced.

In accordance with the detection of a read start action from the user on a predetermined application screen, the ID acquirer 8006 cooperates with a scanner provided to the mobile terminal, and acquires, from the code included in an image acquired by the scanner, the unique ID stored in the code.

The browser 8007 receives a browsing request operation from the user on a predetermined application screen, and accesses the commodity database to acquire the commodity information of the emergency commodity matching the unique ID acquired by the ID acquirer or the unique ID inputted by the user, and displays, on the mobile terminal, an application screen for browsing.

The update requester 8008 sends, to the commodity state management server, an electronic message requesting updating of the commodity data of the commodity information of the emergency commodity that matches the unique ID acquired by the ID acquirer or the unique ID inputted by the user.

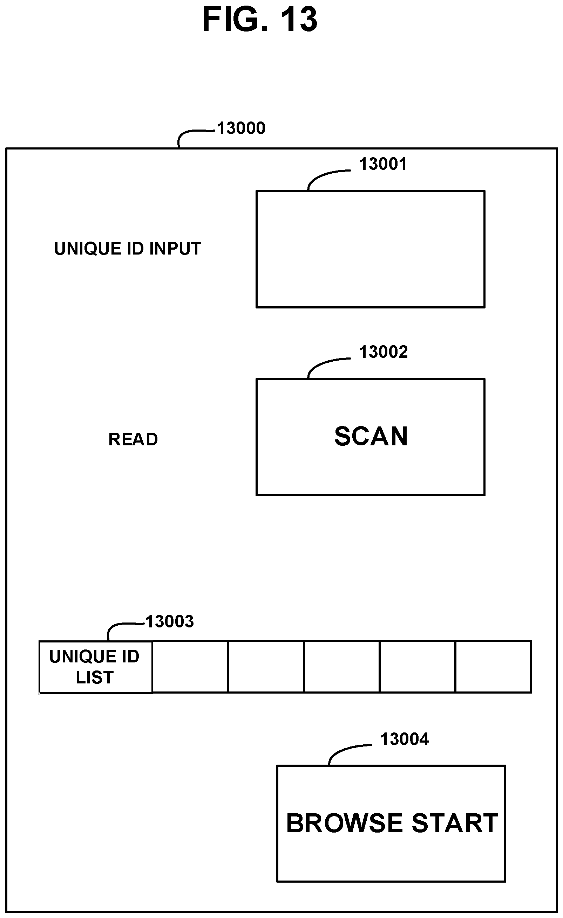

FIG. 13 is a concept drawing of an application screen that receives operations for ID reading and browsing requests.

This application screen includes an input field 13001 in which the user inputs the unique ID of an emergency commodity that the user desires to browse, a scan button 13002 that starts up a function for reading, using the scanner, the two-dimensional code attached to the emergency commodity, a list 13003 of unique IDs of emergency commodities desired to be browsed, and a browse start button 13004 for starting the browsing of the emergency commodities displayed in the list. By performance of a push action on the displayed button by the user, an operation related to a desired function is executed by cooperation between (i) the mobile terminal on which the application is installed and (ii) the commodity state management server and the like.

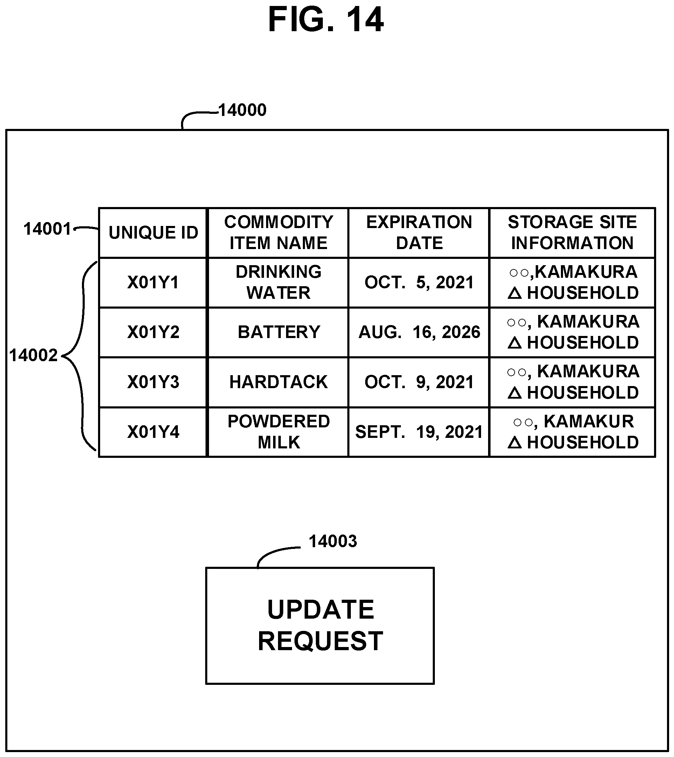

FIG. 14 is an application screen for browsing that is displayed on the mobile terminal as a result of an operation of the user. An application screen 14000 has a screen configuration including browse items 14001, commodity information 14002 related to the unique ID that is input or read, and an update request button 14003.

When a push action on the update request button 14003 from the user is detected, a data update request electronic message related to the emergency request commodity of the displayed unique ID is sent to the commodity state management server 1004 due to the operations of the update requester.

### Supplier terminal

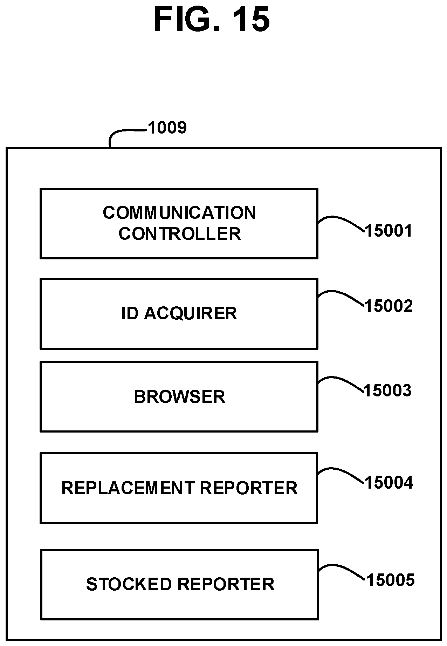

FIG. 15 is a block diagram illustrating functional components realized in the mobile terminal 1009 of the supplier on which the supplier commodity state management application that is provided by the administrator of the commodity state management system of the present embodiment and that is for commodity state management is installed.

These functional components function as a result of the processor of the mobile terminal 1009 executing the supplier commodity state management application that is executably stored by instalment on the storage device of the mobile terminal.

The mobile terminal 1009 includes a communication controller 15001 that controls communication with the commodity state management server 1004, an ID acquirer 15002, a browser 15003, a replacement reporter 15004, and a stocking reporter 15005.

In accordance with the detection of a read start action from the supplier on an application screen of the mobile terminal on which a predetermined supplier application is installed, the ID acquirer 15002 cooperates with a scanner provided to the mobile terminal, and acquires, from the code included in an image acquired by the scanner, the unique ID stored in the code.

The browser 15003 displays the commodity information of the emergency commodity related to the unique ID acquired by the ID acquirer 15002.

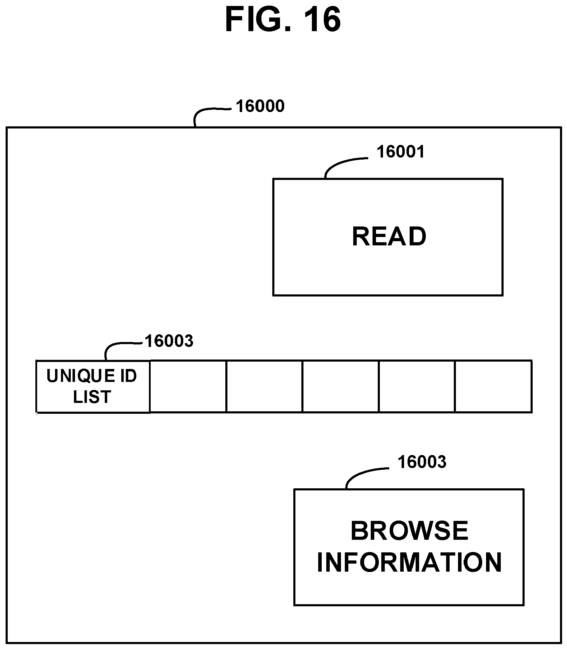

FIG. 16 is a concept drawing illustrating an example of an application screen for ID acquiring and browsing starting. An application screen 16000 has a screen configuration including a read button 16001 that starts up a reading function, a list display 160002 of the read unique ID, and an information display button 16003 for displaying the commodity information of the emergency commodity related to the list-displayed unique ID.

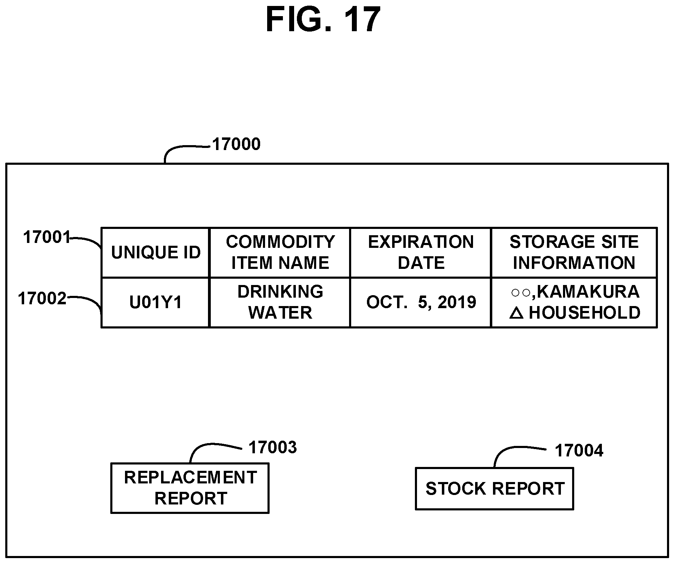

FIG. 17 is an example of a commodity information display screen displayed by an operation of the browser 15003. An application screen 17000 has a configuration including data item names 17001, data 17002 related to the acquired unique ID, a replacement report button 17003, and a stocked report button 17004.

The replacement reporter 15004 sends, to the commodity state management server, the unique ID of the commodity to be replaced that is acquired as a result of an operation by the supplier that performs the replacement work.

In this case, when a button push action on the replacement report button 17003 of the application screen 17000 displayed by the browser is detected, replacement of the emergency commodity related to the unique ID displayed on this application screen is reported.

The stocking reporter 15005 sends, to the commodity state management server, the unique ID of the commodity to be stocked that is acquired as a result of an operation by the supplier that performs the stocking work.

In this case, when a button push action on the stocked report button 17004 of the application screen 17000 displayed by the browser is detected, replacement of the emergency commodity related to the unique ID displayed on this application screen is reported.

### Operations related to replacement

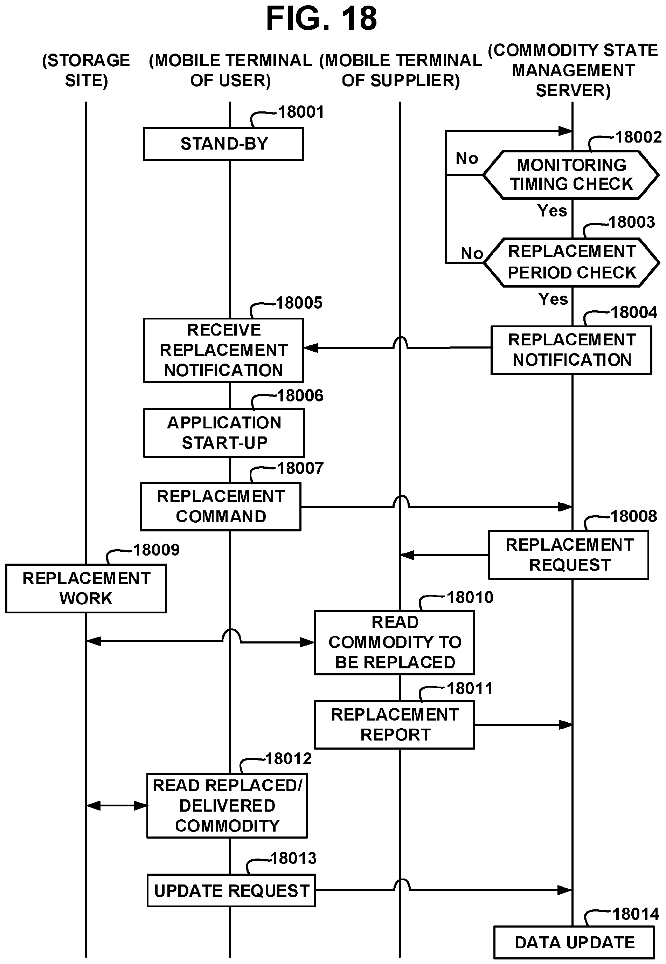

FIG. 18 is a sequence drawing illustrating operations of constituents of a system related to replacing of the present embodiment.

In a stand-by step 18001, the mobile terminal 1006 of the user waits for a push notification that is addressed to the commodity state management application.

In a monitoring timing check step 18002, the commodity state management server checks the monitoring timing on a predetermined cycle.

When it is the monitoring timing, the operations of the commodity state management server transits to a replacement period check step, and when it is not the monitoring timing, the timing check step is carried out in the next cycle.

In the replacement period check step 18003, the commodity state management server determines whether the expiration date of the emergency commodity registered in the commodity database is, at that timing, in a replacement period determined by a calculation method set in advance for each commodity item.

When a determination is made that there is an emergency commodity that matches the replacement period, the operations of the commodity state management server transits to a replacement advance notification step 18004 and, when there is not an emergency commodity that is determined to be in the replacement period, the timing check step 18002 of the next cycle is executed.

In the replacement advance notification step 18004, the commodity state management server pushes a replacement advance notification to the address registered in the user information of the user of that emergency commodity.

In a replacement advance notification receiving step 18005, the mobile terminal of the user detects a predetermined application start-up action on the pushed replacement advance notification.

In an application start-up step 18006, the mobile terminal of the user starts up the commodity state management application, and displays a screen informing of the emergency commodity that matches the replacement period (notification screen 12000 of the application illustrated in FIG. 12).

In a replacement command step 18007, the mobile terminal of the user detects a push action on the notification screen of the replacement command button by the user, and sends a replacement command electronic message to the commodity state management server.

In a replacement request step 18008, the commodity state management server sends, to the mobile terminal of the supplier, a replacement request electronic message.

In a replacement work step 18009, the supplier performs replacement work at the storage site of the emergency commodity of the user.

In a commodity to be replaced reading step 18010, the mobile terminal of the supplier reads the two-dimensional code attached to the commodity to be replaced.

FIG. 16 is an application screen for when reading the two-dimensional code of the commodity to be replaced.

In a replacement reporting step 18011, the mobile terminal operated by the supplier sends, to the commodity state monitoring server, a replacement report electronic message.

FIG. 17 is an application screen for receiving an action of the supplier for sending the replacement report.

In a replacement delivery commodity reading step 18012, the mobile terminal reads, in response to an operation by the user, the unique ID of the replacement delivery commodity delivered for replacement.

In an update request step 18013, the mobile terminal sends, in response to an operation by the user, to the commodity state management server, a data update request electronic message that includes the unique ID of the replacement delivery commodity.

In a data update step 18014, the commodity state management server updates the commodity data related to the received commodity to be replaced to the commodity data of the replacement delivery commodity.

As a result of these operations, the commodity state of the emergency commodity at the storage site is maintained, and the commodity data thereof is updated. The commodity state at the storage site and the commodity data are synchronized, which makes it possible to maintain the commodity state on the basis of the updated commodity data, even after the commodity replacement.

### Industrial Applicability

The present disclosure is applicable to a use in which a supplier of emergency commodities and a user in a household that stockpiles emergency commodities manage commodity states at a storage site.

### Reference Signs List

- 1001: Storage site
- 1002: Emergency commodity
- 1003: Two-dimensional code
- 1004: Commodity state management server
- 1006: Mobile terminal carried by user
- 1007: Communication network
- 1009: Mobile terminal carried by supplier
- 1010: Replacement delivery commodity

## Claims

1. A commodity state management system that includes
a mobile terminal of a user on which a predetermined software program is installed that manages a commodity state of an emergency commodity related to a stockpile of the user, and a server connected to the mobile terminal, the system comprising:
a) a commodity database provided in the server, the commodity database storing, in association with a unique ID assigned to the emergency commodity, a user ID of the user and commodity information including an expiration date of the emergency commodity;
b) a user database provided in the server, the user database storing user information that includes the user ID and an application ID of the software program installed on the mobile terminal, the application ID being recorded in association with a terminal ID of the mobile terminal; and
c) replacement advance notification means provided in the server that monitor the expiration date of the emergency commodity based on the commodity information on a predetermined monitoring schedule, determine whether it is a replacement period of the emergency commodity and, when a determination is made that it is the replacement period, send a replacement advance notification including the unique ID, the replacement advance notification being addressed to the software program installed on the mobile terminal related to the terminal ID that is associated with the application ID included in the user information of the user of the user ID included in the commodity information of the emergency commodity related to the determination,
wherein the software program cooperates with the mobile terminal to realize notification receiving means that automatically receive the replacement advance notification, replacement command means that send an update order request for the emergency commodity related to the replacement advance notification, and browsing means that connect to the commodity database to browse the commodity information associated with the unique ID related to the replacement advance notification.

2. The system according to claim 1, wherein
the software program is installed on the mobile terminal and cooperates with the mobile terminal to further realize
member information input means that input member information including a member configuration of a member that uses the stockpile,
template display means that display a quantity setting template for an emergency commodity list generated in accordance with the member information, and
new order request means that send, to the server, a new order request for the emergency commodity in accordance with the emergency commodity list that is completed by receiving a quantity setting to the quantity setting template.

3. The system according to claim 2, wherein a default quantity calculated based on member information related to an input of the member information is set in the displayed quantity setting template.

4. The system according to claim 1, wherein
code storage presentation means that store a code including the unique ID and that are capable of presenting the code to the mobile terminal in a predetermined presentation method are attached to the emergency commodity, and
the software program is installed on the mobile terminal and cooperates with the mobile terminal to further realize ID acquiring means that receive the code related to the presentation to acquire the unique ID.

5. The system according to claim 1, wherein the commodity information further includes commodity item identification information of the emergency commodity.

6. The system according to claim 4, wherein the presentation method is an optically readable display of the code, and the acquiring of the unique ID is realized by cooperation between an image acquirer of the mobile terminal and the software program.

7. The system according to claim 4, wherein the presentation method is sending of the code wirelessly, and the acquiring of the unique ID is realized by cooperation between a wireless function of the mobile terminal and the software program.

8. The system according to claim 1, wherein update request means that send to the server a unique code of the emergency commodity provided by the update order request to request updating of the commodity information of the emergency commodity related to the stockpile are realized by the software program being installed on the mobile terminal and cooperating with the mobile terminal.
